Europäisches Patentamt

European Patent Office

Office européen des brevets

(19)

(11) Numéro de publication: **0 138 709**
**B1**

(12) **FASCICULE DE BREVET EUROPEEN**

(45) Date de publication du fascicule du brevet: **18.05.88**

(51) Int. Cl.⁴: **G 06 F 11/00**, G 06 F 11/14

(21) Numéro de dépôt: **84402048.7**

(22) Date de dépôt: **11.10.84**

(54) **Contrôle du chargement de circuits intégrés du type registre série-parallèle ayant un registre de chargement distinct des étages de sortie.**

(30) Priorité: **14.10.83 FR 8316668**

(43) Date de publication de la demande:
**24.04.85 Bulletin 85/17**

(45) Mention de la délivrance du brevet:
**18.05.88 Bulletin 88/20**

(84) Etats contractants désignés:
**DE GB IT**

(56) Documents cités:
**DE-A-2 326 873**
**DE-A-2 946 081**
**FR-A-2 326 080**
**US-A-4 247 913**
**US-A-4 340 965**

**IBM TECHNICAL DISCLOSURE BULLETIN, vol. 19, no. 12, mai 1977, page 4513, New York, US; E.P. LUTTER: "Shift register verifier"**
**Löbel, Müller, Schmid, "Lexikon der Datenverarbeitung", 1969, pages 177, 178, paragraphe "Fehlerkorrektur"**

(73) Titulaire: **AUTOMOBILES CITROEN**
**62 Boulevard Victor-Hugo**
**F-92200 Neuilly-sur-Seine (FR)**
(73) Titulaire: **AUTOMOBILES PEUGEOT**
**75, avenue de la Grande Armée**
**F-75116 Paris (FR)**

(72) Inventeur: **Duc, Michel**
**10, rue Paul Gauguin**
**F-91600 Savigny S/Orge (FR)**
Inventeur: **Montreuil, Philippe**
**5, allée des Sassiers**
**F-77200 Torcy (FR)**

(74) Mandataire: **Boivin, Claude**
**9, rue Edouard-Charton**
**F-78000 Versailles (FR)**

Courier Press, Leamington Spa, England.

EP 0 138 709 B1

**Description**

La présente invention concerne le contrôle du chargement de circuits intégrés du type registre série parallèle dans lesquels parviennent outre des impulsions d'horloge, une série de signaux de données destinés à être répartis successivement, sous la dépendance des impulsions d'horloge, dans un ensemble de circuits de sortie montés en parallèle.

Ce type de registre est utilisé par exemple dans le périphérique de tableaux de bord utilisés dans les systèmes dits de "multiplexage" appliqués aux véhicules terrestres, aériens ou marins. Dans de genre d'applications, le registre est associé à une logique câblée ou à un micro-processeur et sert à déterminer la commande de divers organes du véhicule.

Il peut arriver que le registre omette, pour une raison ou pour une autre, de prendre en compte une ou plusieurs impulsions d'horloge ou bien, au contraire, prenne en compte une ou plusieurs impulsions parasites. Il en résulte un décalage des signaux de données et une perturbation dans le fonctionnement du périphérique. Ainsi, par exemple, dans le cas d'un véhicule terrestre, la commande des phares peut entraîner la mise en service de l'alarme ou de la ventilation.

Il est connu du document IBM Technical Disclosure Bulletin, Vol. 19, N° 12, Mai 1977, page 4513, de contrôler la transmission de données à travers un registre à décalage à partir de la sortie dudit registre au moyen d'un bit de fin détecté en sortie. Cependant ce document ne prévoit pas un contrôle à l'introduction des données et des mesures permettant d'empêcher le stockage de données dans ledit registre à décalage en cas de signaux parasites.

La présente invention, telle qu'elle est caractérisée, a pour objet un montage comprenant un registre série-parallèle et une logique câblée ou micro-programmée et que est perfectionné de manière à remédier à cet inconvénient.

En admettant par exemple que la logique et le registre soient tous deux à 36 bits, un bit d'initialisation doit parvenir à sa sortie après l'arrivée de la trente-sixième impulsion d'horloge. Si cela est réalisé, l'ordre de commande est conservé.

Mais si le bit parvient à sa sortie alors que la logique n'a généré qu'un nombre d'impulsions d'horloge inférieur à 36, cela veut dire que le registre a pris en compte un signal parasite. Inversement, si le bit d'initialisation ne parvient pas à la sortie du registre après la génération de 36 impulsions d'horloge, cela veut dire que le registre n'a pas pris en compte l'un des signaux d'horloge que lui a envoyé la logique. Dans les deux cas, la commande serait erronée; mais cette commande n'a pas lieu car la commande n'est pas conservée.

On a décrit ci-après, à titre d'exemple non limitatif, un mode de réalisation du montage selon l'invention, avec référence au dessin annexé dans lequel:

La Figure 1 montre un exemple d'utilisation du montage;

La Figure 2 montre les connexions entre la logique et le registre.

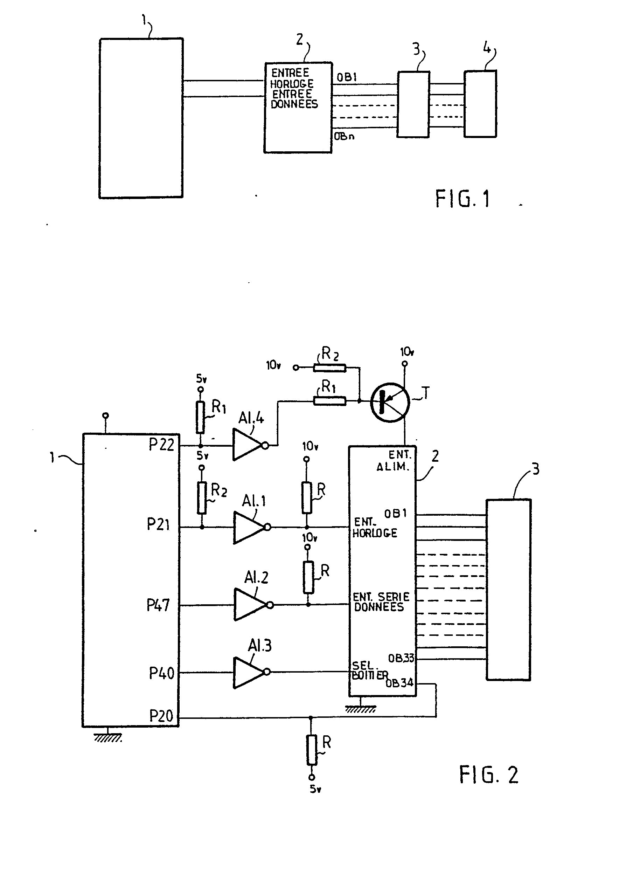

Tel qu'il est représenté à la Figure 1, le dispositif selon l'invention comprend un micro-processeur 1 du type MC 6801 qui commande un registre à décalage 2 du type MM 5450, ne comportant pas d'entrée de réinitialisation. Les sorties de ces registres sont connectées à un commutateur de puissance 3 commandant des organes périphériques 4.

Comme on le voit plus particulièrement à la Figure 2, le port 21 du micro-processeur 1, qui est une sortie d'un circuit entrée-sortie ou 1/0 de ce micro-processeur, est connecté à l'entrée horloge du registre 2 par l'intermédiaire d'un amplificateur-inverseur $A_1$.

Le port 47, qui est une autre entrée-sortie du micro-processeur 1, est connecté par un amplificateur-inverseur $A_2$ à l'entrée série des données du registre. Le port 40 qui est une autre sortie de ce même circuit entrée-sortie est connecté par l'intermédiaire d'un amplificateur-inverseur $A_3$ à l'entrée de sélection de boîtier du registre 2.

Le registre 2 est à 36 bits. Le premier bit envoyé n'est pas un bit de donnée, mais un bit de niveau haut servant à initialiser le chargement du registre 2. Les deuxième à trente-sixième bits sont envoyés successivement au registre interne du circuit 2.

La sortie $OB_{34}$ du registre 2 est connectée au port 20 du microprocessor 1. Celui-ci est programmé de façon connue en soi pour tester le bit reçu par ce port, ce test étant effectué en réalisant un ET logique entre le bit à tester et un bit de référence.

Le port 22 du premier circuit entrée-sortie du micro-processeur 1 est connecté par l'intermédiaire d'un amplificateur-inverseur $A_4$ et d'une résistance $R_1$ à la base d'un transistor T dont l'émetteur et le collecteur sont respectivement connectés à la source d'alimentation et à l'entrée alimentation du registre 2. La base du transistor est également connectée à la source de tension par une résistance $R_2$, les résistances $R_1$ et $R_2$ formant diviseur de tension. Le signal à ce port 22 dépend du test indiqué ci-dessus, comme cela est expliqué plus loin.

Lorsqu'il est nécessaire d'envoyer de nouvelles données au registre 2, le micro-processeur 1 envoie un premier bit d'initialisation au registre 2 et une impulsion sur l'entrée horloge de ce registre; il génère également un certain niveau de tension sur l'entrée de sélection du boîtier afin de mettre en service le registre.

Le micro-processeur envoie ensuite les 34 bits de commande en synchronisation avec les impulsions d'horloge qui assurent le décalage du registre.

Lorsqu'un bit arrive à la sortie $OB_{34}$ du registre 2, il est transmis au port 20 et testé; si le micro-processeur 1 a envoyé trente six impulsions d'horloge, il y a concordance entre les impulsions émises et reçues et le port 22 est à une tension positive. Le signal amplifié et inversé est appliqué à la base du transistor T qu'il rend passant. L'alimentation du registre 2 est ainsi connectée au pôle positif de la source d'alimentation et la commande est conservée.

Dans le cas contraire, c'est-à-dire si un bit arrivé à la sortie $OB_{34}$ avant que le micro-processeur 1 ait envoyé trente six impulsions d'horloge, ou bien si aucun bit n'est encore arrivé à la sortie $OB_{34}$ lorsque le micro-processur 1 a généré trente six impulsions d'horloge, la base du transistor T est portée au potentiel positif de la source d'alimentation et le transistor est bloqué. Le registre 2 n'est pas connecté à l'alimentation et la commande n'est pas conservée.

**Revendications**

1. Montage comprenant une logique câblée ou microprogrammée (1) et un registre série-parallèle (2) qui comporte une entrée d'impulsions horloge (ENTREE HORLOGE) et des sorties ($OB_1$ à $OB_n$) de signaux de commande destinés à être répartis·successivement, sous la dépendance des impulsions d'horloge, dans un ensemble de sorties montées en parallèle, caractérisé en ce qu'un bit d'initialisation est transféré vers l'entrée série de données du registre préalablement au transfert des signaux de commande ainsi que par des moyens commandés par l'état de la dernière sortie ($OB_{34}$) du registre (2) pour vérifier la concordance entre le nombre d'impulsions d'horloge générées par la logique lors de l'introduction sérielle des signaux de commande dans le registre et celui du nombre d'impulsions d'horloge pris en compte par le registre, et par des moyens pour couper la tension d'alimentation (ENTREE ALIMENTATION) du registre (2), nécessaire à la conservation des signaux de commande dans le registre, dans le cas où cette condition n'est pas satisfaite.

2. Montage selon la revendication 1, caractérisé en ce que les moyens pour couper l'alimentation du registre (2) comprennent un transistor (T) dont le collecteur et l'émetteur sont connectés respectivement à l'alimentation du registre et à la source d'alimentation alors que sa base est connectée par une première résistance ($R_1$) à la source d'alimentation et par une seconde résistance à un port de test de la logique.

**Patentansprüche**

1. Anordnung aus einer fest verdrahteten oder mikroprogrammierten Logik (1) und einem Serien-Parallel-Register (2), das einen Eingang (ENTREE HORLOGE) für Taktimpulse und Ausgänge (OB1—OBn) für Steuersignale aufweist, die dazu bestimmt sind, aufeinanderfolgend in Abhängigkeit von den Taktimpulse auf eine Gruppe von zueinander parallel angeordneten Ausgängen verteilt zu werden, dadurch gekennzeichnet, daß vor der Übertragung von Steuersignalen ein Initialisierungsbit auf den Serien-Dateneingang des Registres übertragen wird und daß vom Zustand des letzten Ausgangs (OB34) des Registers (2) gesteuerte Mittel vorhanden sind zur Prüfung der Übereinstimmung zwischen der Anzahl der von der Logik seit der seriellen Eingabe der Steuersignale in das Register erzeugten Taktimpulse und derjenigen Anzahl von Taktimpulsen, die vom Register gezählt werden und daß Mittel vorhanden sind zum Abschalten der für die Speicherung der Steuersignale im Register notwendigen Speisespannung (ENTREE ALIMENTATION) des Registers (2), falls diese Bedingung nicht erfüllt ist.

2. Anordnung nach Anspruch 1, dadurch gekennzeichnet, daß die Mittel zum Abschalten der Speisespannung des Registers (2) einen Transistor (T) enthalten, dessen Kollektor und Emitter jeweils mit dem Speiseeingang des Registers und der Speisespannungsquelle verbunden sind, während seine Basis über einen ersten Widerstand (R1) mit der Speisespannungsquelle und über einen zweiten Widerstand mit einem Testausgang der Logik verbunden ist.

**Claims**

1. Circuit including a wired or microprogrammed logic (1) and a series-parallel register (2) which includes a clock pulse input (CLOCK INPUT) and outputs ($OB_1$ to $OB_n$) for the control signals intended to be distributed successively, under the dependence of the clock pulses, to an assembly of parallel connected outputs, characterized in that an initialization bit is transferred to the series data input of the register prior to the transfer of the command signals as well as by means controlled by the state of the last output ($OB_{34}$) of the register (2) for checking the concordance between the number of clock pulses generated by the logic during the series introduction of the control signals into the register and that of the number of clock signals taken into account by the register, and by means for cutting off the power supply voltage (POWER SUPPLY INPUT) of the register (2), required for keeping the control signals in the register, in the case where this condition is not satisfied.

2. Circuit according to claim 1, characterized in that the means for cutting of the power supply to the register (2) include a transistor (T) whose collector and emitter are connected respectively to the power supply of the register and to the power supply source whereas its base is connected through a first resistor ($R_1$) to the power supply source and through a second resistor to a port for testing the logic.

FIG. 1

FIG. 2